# EUROPEAN PATENT APPLICATION

(11) **EP 4 769 184 A1**
(43) Date of publication of application: **01.07.2026**
(21) Application number: 24939889.2
(22) Date of filing: 05.12.2024
(51) Int. Cl.: G06F 18/23211, G06F 18/23213, G06F 18/2135, G06F 16/35, G06F 123/02

(54) **ELECTRONIC DEVICE, RECORDING MEDIUM, AND METHOD FOR CLUSTERING DATA RELATED TO BATTERY CHARGING PATTERN THEREOF**

(30) Priority: 22.05.2024 KR 20240066357; 25.07.2024 KR 20240098789
(71) Applicant: LG Energy Solution, Ltd., Seoul 07335 (KR)
(72) Inventor: KIM, Kangsan, Daejeon 34122 (KR); KIM, Jangkyum, Daejeon 34122 (KR); RYU, Seunghyoung, Daejeon 34122 (KR)
(74) Representative: Plasseraud IP
(86) International application number: PCT/KR2024/019879
(87) International publication number: WO 2025/244215

(57) **Abstract**

Provided is an electronic device for clustering data related to a battery charging pattern. The electronic device may be configured to: acquire a plurality of pieces of battery charging data for a plurality of vehicles; generate a plurality of features related to a battery charging pattern on the basis of the plurality of pieces of battery charging data; classify the plurality of features into a preset number of data sets by sampling the plurality of features; determine the number of clusters corresponding to each of the preset number of data sets on the basis of a clustering algorithm and an index for evaluating a clustering result; set a reference number of clusters corresponding to the plurality of features on the basis of the optimal number of clusters of each of the preset number of data sets; and cluster the plurality of features into clusters of the reference number of clusters.

## Description

### Technical Field

The present disclosure relates to an electronic apparatus, a recording medium, and a method for clustering data regarding a battery charging pattern, and more specifically, to a technique for clustering battery charging pattern data for defining types of charging patterns of electric vehicle users

This application claims priority to and benefit of Korean Patent Application No. 2024-0066357 filed on May 22, 2024 and Korean Patent Application No. 2024-0098789 filed on July 25, 2024, in the Korean Intellectual Property Office, the entire contents of which are incorporated herein by reference.

### Background Art

In order to standardize and categorize time-series data, using a clustering algorithm which is an unsupervised learning algorithm has been proposed. However, when clustering is performed on an excessively large amount of time-series data, the clustering may be performed using overly small number of clusters as series of data may exist on different types of boundary lines, and thus a problem of data with different characteristics being classified as one type may occur. When taking into consideration that purpose of the clustering is to identify characteristics of each target data and to discover meaningful types of data, it may be regarded that performance of the clustering is significantly low when data included in each type of data show different characteristics due to mixture of data.

Therefore, conventionally, the problem caused by mixture of data is prevented by using a sufficient number of clusters when clustering, and data types have been discovered and defined by superimposing data using characteristics of probability distribution and merging data artificially. However, subjective factors are involved in such a method, and the method requires long processing time.

In addition, although clustering is generally an unsupervised learning algorithm, an optimal number of clusters may be selected using an evaluation index to assess performance of the clustering. However, as an index being used show a monotone decreasing trend or a monotone increasing trend instead of being in a convex form, there is a problem of having difficulty selecting an adequate elbow point (a point at which a reduction ratio of a predetermined cost function for clustering performance evaluation show sharp decline). Accordingly, there is a need for a way to draw an objective index for determining more adequate number of clusters in order to perform clustering for discovering patterns.

### Detailed Description of the Invention

### Technical Goals

Aspects of the present disclosure are to address at least the above-mentioned problems, and to provide an electronic apparatus and a method for clustering data regarding a battery charging pattern.

The goals to be achieved by example embodiments of the present disclosure are not limited to the objects described above and other objects may be inferred from the following example embodiments.

### Technical solutions

According to an aspect, there is provided an electronic apparatus including a transceiver, a processor, and one or more memories storing one or more instructions, wherein, when executed, the one or more instructions are configured to cause the processor to acquire a plurality of battery charge data of a plurality of vehicles, generate a plurality of features of a battery charging pattern based on the plurality of battery charge data, classify the plurality of features into a predetermined number of data sets by sampling the plurality of features, determine a number of clusters corresponding to each of the predetermined number of data sets based on a clustering algorithm and an index for evaluating a result of clustering, set a reference number of clusters corresponding to the plurality of features based on an optimal number of clusters for each of the predetermined number of data sets, and perform clustering of plurality of features into clusters of which a number is the reference number of clusters.

The plurality of battery charge data may include a state of charge (SoC) over time for each of a plurality of batteries included in the plurality of vehicles as data collected during a predetermined period of time.

When executed, the one or more instructions may be configured to cause the processor to identify one or more charging sections based on first battery charge data of a first vehicle among the plurality of battery charge data of the plurality of vehicles, identify a battery SoC at a start of a charging and a battery SoC at an end of the charging for each of the one or more charging sections, and generate a first feature indicating frequency of the one or more charging sections corresponding to a range of a battery SoC at the start of the charging and a range of a battery SoC at the end of the charging.

Each of the predetermined number of data sets may include at least one feature, and a number of the at least one feature may be determined in proportion to a number of the plurality of features.

When executed, the one or more instructions may be configured to cause the processor to perform clustering multiple times on a first data set among the predetermined number of data sets so that the first data set has different numbers of clusters according to the clustering algorithm and determine an optimal number of clusters for the first data set based on a result of the clustering performed multiple times and an index for evaluating the result of the clustering.

The clustering algorithm may include at least one of a hierarchical clustering algorithm that stratifies at least one feature included in each data set based on similarity and a K-means clustering algorithm that clusters the at least one feature included in each data set based on a centroid.

The index may include a first index, a second index, and a third index, and when executed, the one or more instructions may be configured to cause the processor to calculate each of the first index according to a number of clusters, the second index according to a number of clusters, and the third index according to a number of clusters, based on the result of the clustering performed multiple times and determine the optimal number of clusters for the first data set based on a first number of clusters corresponding to a maximum value or a minimum value of the first index according to the calculated number of clusters, a second number of clusters corresponding to a maximum value or a minimum value of the second index according to the calculated number of clusters, and a third number of clusters corresponding to a maximum value or a minimum value of the third index according to the calculated number of clusters.

Each of the first index, the second index, and the third index may include at least one of a Silhouette Index technique, a Calinski-Harabasz Index technique, and a Davies-Bouldin Index technique, that evaluates a result of clustering based on cohesion of each cluster and separation between clusters for each result of clustering performed according to the clustering algorithm.

When executed, the one or more instructions may be configured to cause the processor to set an average value of the optimal number of clusters for each of the predetermined number of data sets as the reference number of clusters.

A method for clustering data regarding a battery charging pattern may include acquiring a plurality of battery charge data of a plurality of vehicles, generating a plurality of features of a battery charging pattern based on the plurality of battery charge data, classifying the plurality of features into a predetermined number of data sets by sampling the plurality of features, determining a number of clusters corresponding to each of the predetermined number of data sets based on a clustering algorithm and an index for evaluating a result of clustering, setting a reference number of clusters corresponding to the plurality of features based on an optimal number of clusters for each of the predetermined number of data sets, and performing clustering the plurality of features into clusters of which a number is the reference number of clusters.

As a non-transitory computer-readable recording medium in which a program for executing the method on a computer is stored, the method for clustering data regarding a battery charging pattern may include acquiring a plurality of battery charge data of a plurality of vehicles, generating a plurality of features of a battery charging pattern based on the plurality of battery charge data, classifying the plurality of features into a predetermined number of data sets by sampling the plurality of features, determining a number of clusters corresponding to each of the predetermined number of data sets based on a clustering algorithm and an index for evaluating a result of clustering, setting a reference number of clusters corresponding to the plurality of features based on an optimal number of clusters for each of the predetermined number of data sets, and performing clustering the plurality of features into clusters of which a number is the reference number of clusters.

### Effects of the Invention

According to the example embodiments, when discovering a type of a plurality of battery charge data, a type of a charging pattern which causes for more effective identification of characteristics of data may be discovered by selecting an adequate number of clusters.

According to the example embodiments, it is possible to define optimal types by minimizing the influence of data existing on boundary lines between clusters and preventing an overfitting that may occur in specific clusters.

Effects of the present disclosure are not limited to those described above and other effects may be made apparent to those skilled in the art from the following description.

### Brief Description of Drawings

FIG. 1 is a block diagram of an electronic apparatus according to an example embodiment.
FIG. 2 is a flow chart illustrating a method for clustering data regarding a battery charging pattern.
FIG. 3 is a diagram illustrating a process of generating a feature according to an example embodiment.
FIG. 4 is a diagram illustrating a process of classifying a feature according to an example embodiment.
FIG. 5 is a diagram illustrating a process of determining an optimal number of clusters corresponding to a data set according to an example embodiment.
FIG. 6a is a graph showing a first index, according to a number of clusters, according to an example embodiment.
FIG. 6b is a graph showing a second index, according to a number of clusters, according to an example embodiment.
FIG. 6c is a graph showing a third index, according to a number of clusters, according to an example embodiment.
FIG. 7 is a diagram illustrating a process of setting a reference number of clusters according to an example embodiment of the present disclosure.

### Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. Accordingly, it should be noted that the terms used herein should be construed based on practical meanings thereof and the whole content of this specification, rather than being simply construed based on names of the terms.

In the entire specification, when an element is referred to as "comprising" or "including" another element, the element should not be understood as excluding other elements so long as there is no special conflicting description, and the element may include at least one other element. In addition, the terms "unit" and "module", for example, may refer to a component that exerts at least one function or operation, and may be realized in hardware or software, or may be realized by combination of hardware and software.

Throughout the specification, expression "at least one of a, b, and c" may include 'a only', 'b only', 'c only', 'a and b', 'a and c', 'b and c', or 'all of a, b, and c'.

In the following description, example embodiments of the present disclosure will be described in detail with reference to accompanying drawings so that those skilled in the art can easily carry out the present disclosure. However, the present disclosure may be embodied in many different forms and is not limited to the example embodiments described herein.

Hereinafter, example embodiments of an electronic apparatus for a method for clustering data regarding a battery charging pattern of the present disclosure will be described with reference to the drawings.

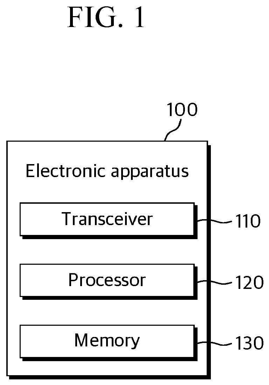

FIG. 1 is a block diagram of an electronic apparatus according to an example embodiment.

Referring to FIG. 1, an electronic apparatus 100 may include a transceiver 110, a processor 120, and a memory 130 according to an example embodiment. Only components related to the electronic apparatus 100 are illustrated in FIG. 1. Therefore, it is to be understood by those skilled in the art that other general-purpose components may be further included in addition to the components illustrated in FIG. 1.

For example, the electronic apparatus 100 may include a communication device including one or more transceivers 110, an input part, and an output part. As a device for wired/wireless communication, the communication device may communicate with an external electronic device. The external electronic device may be a terminal or a server. Also, communication technologies supported by the communication device may include global system for mobile communication (GSM), code division multi access (CDMA), long term evolution (LTE), wireless-fidelity (Wi-Fi), Bluetooth, radio frequency identification (RFID), infrared data association (IrDA), zigBee, near field communication (NFC), and the like. The input part, for example, may be a conventional keypad and keyboard, a mouse, a microphone which receives a voice signal, a camera, and other various types of input means that detects or receives various forms of user inputs. The output part, for example, may be a display panel that outputs an image, a speaker that outputs sound, a haptic device that generates vibration, and other various output means.

According to an example embodiment, the electronic apparatus 100 may be a server that acquires and processes data of a plurality of vehicles. More specifically, the data of the plurality of vehicles may include a plurality of battery charge data of the plurality of vehicles. The plurality of battery charge data, for example, may be acquired from at least one of an on-board diagnostics (OBD), a battery management system (BMS), and a device in which battery charge data is stored in advance (e.g., database), mounted in each vehicle, through the transceiver 110 of the electronic apparatus 100. The method used by the electronic apparatus 100 to acquire the plurality of battery charge data is not limited to the example described above, and it is to be understood by those skilled in the art that the electronic apparatus 100 may acquire the data from different devices with communication capabilities through the transceiver 110. Types of the electronic apparatus 100 is not limited thereto, and example embodiments of the present disclosure may be applied to various devices that can acquire and process data on a vehicle.

The processor 120 may control overall operation of the electronic apparatus 100 and process data and a signal. The processor 120 may be configured as at least one hardware unit. Also, the processor 120 may be operated by one or more software modules generated by executing a program code stored in the memory 130. Since the processor 120 may include a memory, the processor 120 may control overall operation of the electronic apparatus 100 and process data and a signal by executing a program code stored in the memory.

The processor 120 may be embodied as hardware, software, a computer according to a combination thereof, or a similar device. As hardware, the processor 120 may be embodied as an electronic circuit for performing a control function by processing an electrical signal, and as software, the processor 120 may be embodied as a program for operating the hardware form of the processor 120. However, it is to be understood that an operation of the electronic apparatus is controlled and performed by the processor 120 unless otherwise mentioned in the description below. That is, when modules implemented to a data clustering system regarding battery charging pattern are executed, it may be understood that the modules control the processor 120 to perform below operations of the electronic apparatus 100.

The memory 130 may store various types of information. The memory 130 may store data temporarily or semi-permanently. For example, data on an operating system (OS) for operating the electronic apparatus 100 or the like may be stored in the memory 130 of the electronic apparatus 100. The memory 130 may be a hard disk drive (HDD), a solid-state drive (SSD), a flash memory, a read-only memory (ROM), a random-access memory (RAM), or the like. The memory 130 may be provided in an embedded type or removable type.

In summary, example embodiments may be implemented using different means. For example, example embodiments may be embodied as hardware, firmware, software of a combination thereof.

When embodied as hardware, the method according to example embodiments may be implemented by one or more application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and the like.

When embodied as firmware or software, the method according to example embodiments may be implemented as a module, a process, a function, or the like that perform a function or an operation described above. For example, a software code may be stored in a memory and executed by a processor. The memory may be located within or outside the processor, and may exchange data with the processor through various means that have been notified in advance.

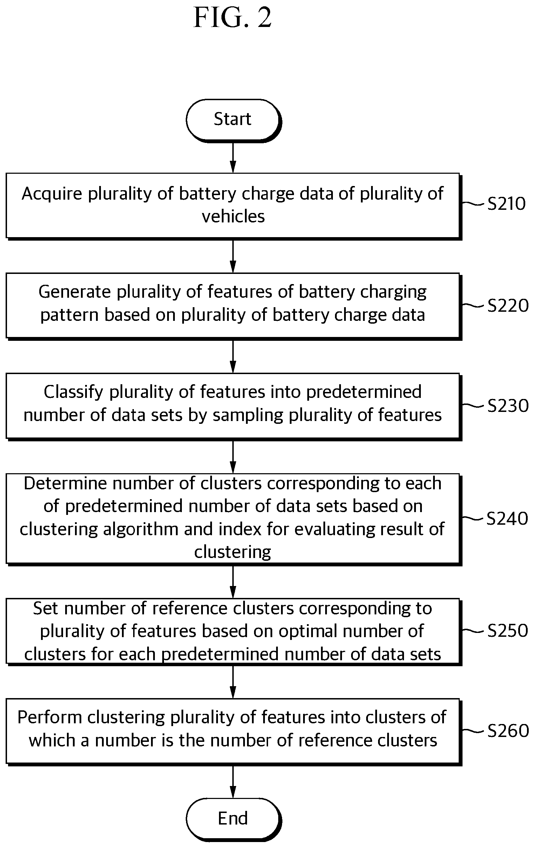

FIG. 2 is a flow chart illustrating a method for clustering data regarding a battery charging pattern.

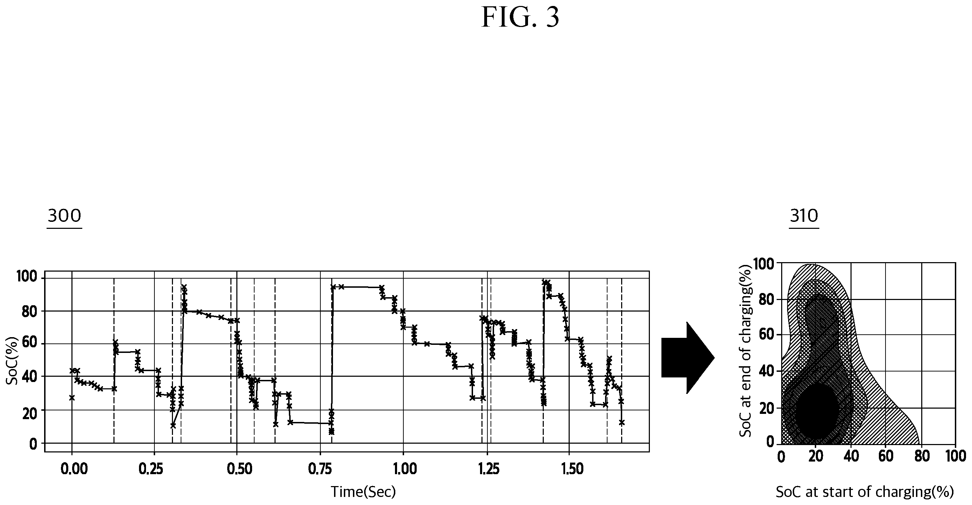

In operation S210, the electronic apparatus 100 may acquire a plurality of battery charge data of a plurality of vehicles. Here, the plurality of battery charge data may include a state of charge (SoC) over time for each of a plurality of batteries included in the plurality of vehicles as data collected during a predetermined period of time. The predetermined period of time may be a period of time in which charging and discharging of a battery is performed multiple times, and, for example, the predetermined period of time may be one month. Accordingly, the plurality of battery charge data may be time-series data including information on SoC change over time during which charging and discharging of each battery included the plurality of batteries included in the plurality of vehicles is repeated. More specific example embodiment of battery charge data will be described in detail with reference to FIG. 3 below.

In operation S220, the electronic apparatus 100 may generate a plurality of features of a battery charging pattern based on the plurality of battery charge data. More specific process of the electronic apparatus 100 generating a feature will be described in detail with reference to FIG. 3 below.

In operation S230, the electronic apparatus 100 may classify the plurality of features into a predetermined number of data sets by sampling the plurality of features. The sampling of the features, for example, may be performed randomly. In addition, according to example embodiments, the electronic apparatus 100 may perform sampling so that a composition of each data set does not give too much importance to a feature of a specific vehicle. More specific example embodiment on classifying the plurality of features into the predetermined number of data sets will be described in detail with reference to FIG. 3 below.

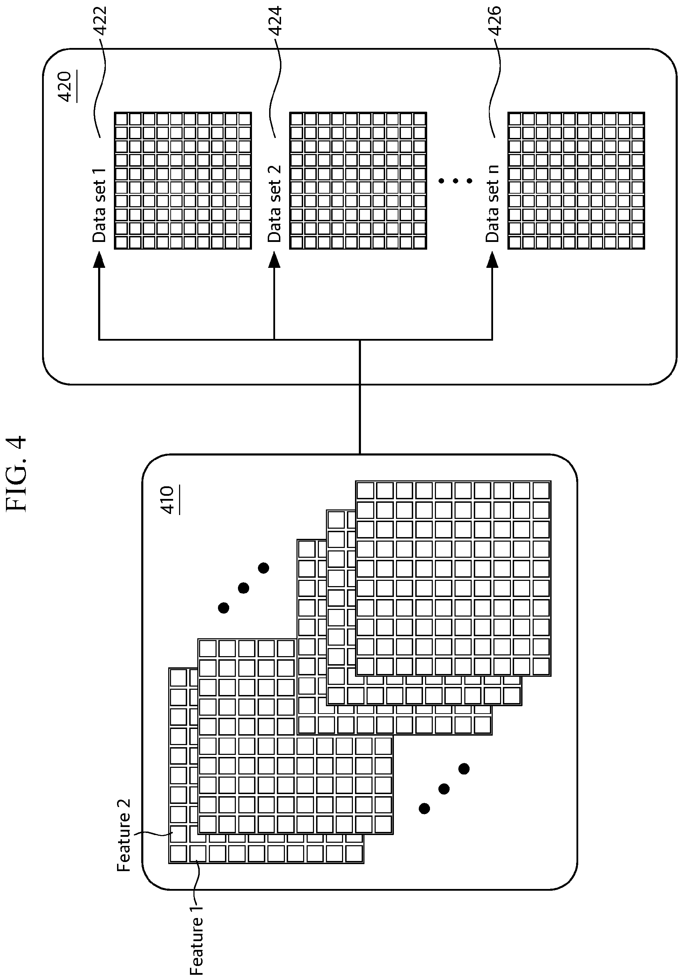

In operation S240, the electronic apparatus 100 may determine a number of clusters corresponding to each of the predetermined number of data sets based on a clustering algorithm and an index for evaluating a result of clustering. The clustering algorithm may be an algorithm for dividing target data into clusters of similar characteristics, and the index may be an indicator for quantitatively evaluating performance of the clustering based on cohesion (a criterion used to see how closely data within a same cluster are gathered), separation (a criterion used to see how distinctively clusters different from each other are separated), and the like. More specific example embodiment of how the electronic apparatus 100 determines the number of clusters corresponding to each of the predetermined number of data sets based on the clustering algorithm and the index will be described in detail with reference to FIG. 4 below.

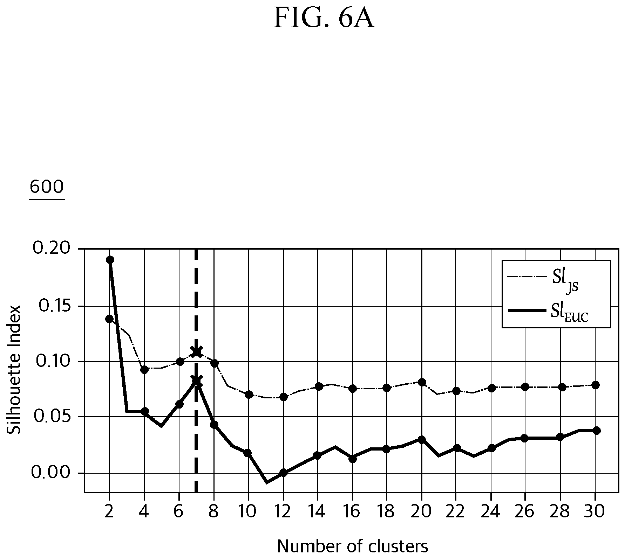

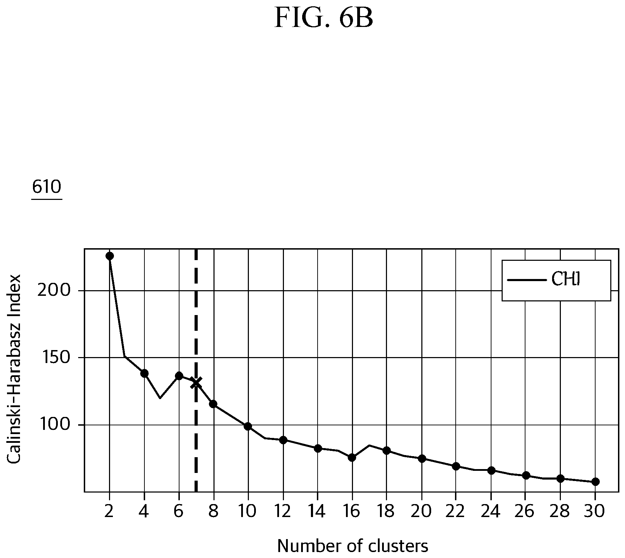

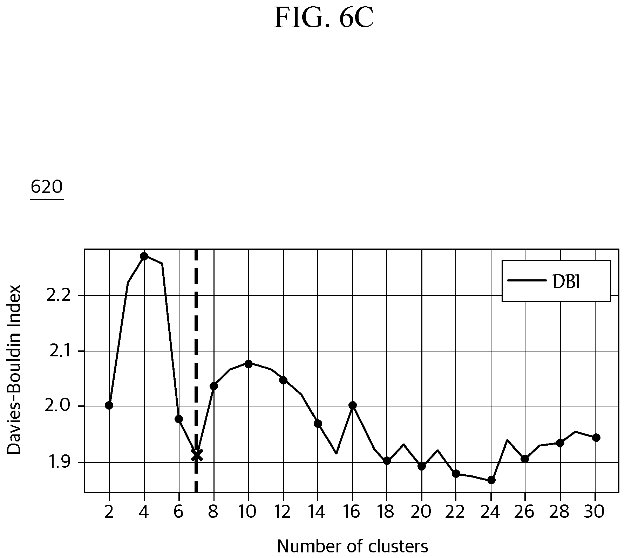

In operation S250, the electronic apparatus 100 may set a reference number of clusters corresponding to the plurality of features based on an optimal number of clusters for each of the predetermined number of data sets. That is, the electronic apparatus 100 may set a final reference number of clusters that causes for more effective clustering of the plurality of features based on the optimal number of clusters for each data set. More specific example embodiment of the electronic apparatus 100 setting the reference number of clusters using the optimal number of clusters for each data set will be described in detail with reference to FIG. 6 below.

In operation S260, the electronic apparatus 100 may perform clustering the plurality of features into clusters of which a number is the reference number of clusters. Through the clustering, the battery charging pattern may be further subdivided, and different types causing for objective classification may be discovered.

FIG. 3 is a diagram illustrating a process of generating a feature according to an example embodiment.

According to an example embodiment, the electronic apparatus 100 may identify one or more charging sections based on first battery charge data of a first vehicle among the plurality of battery charge data of the plurality of vehicles, and identify a battery SoC at a start of a charging and a battery SoC at an end of the charging for each of the one or more charging sections. Then, the electronic apparatus 100 may generate a first feature indicating frequency of the one or more charging sections corresponding to a range of a battery SoC at the start of the charging and a range of a battery SoC at the end of the charging as a feature related to a charging pattern of the first battery charge data. More specifically, the electronic apparatus 100 may analyze the frequency of the charging section and estimate a probability distribution function of frequency of each charging section based on the first battery charge data. The electronic apparatus 100 may generate a feature in an image form showing frequency of a battery charging section of a corresponding vehicle based on the estimated probability distribution function. The electronic apparatus 100 may generate a plurality of features of a battery charging pattern by performing the process for each of the plurality of battery charge data.

Each of the plurality of features presented in an image form may show a specific battery charging pattern extracted from battery charge data of a specific vehicle. That is, when users of vehicles from which battery charge data is collected are different, each feature may show a charging pattern of each user of a corresponding vehicle.

Referring to FIG. 3, the first battery charge data of the first vehicle may be in the form of a graph 300, with time on the x-axis and SoC on the y-axis. Specifically, the graph 300 may include information on SoC of a first battery of the first vehicle during a predetermined period of time, and more specifically, may include information on a charging section identified every time the first battery is charged. Accordingly, the graph 300 may show at what level of SoC the charging of the first battery starts and at what level of SoC the charging ends. The electronic apparatus 100 may estimate the probability distribution function of frequency of charging sections by analyzing frequencies of a number of charging sections identified based on the graph 300 of the first battery charge data, and may generate a feature 310 of the first battery charge data based on the estimated probability distribution function.

The feature 310 generated in response to the first battery charge data may be in a two-dimensional image form with SoC at a start of a charging on the x-axis and SoC at an end of the charging on the y-axis, and the shade of the feature 310 may indicate frequency of a charging section. That is, the darker the shade of a section within the feature 310 is, the section may be a section of which the first battery is more frequently charged. Accordingly, the feature 310 may show a charging habit or tendency on mostly at what level of SoC the charging starts, and at what level of SoC the charging ends, and as a more specific example, the feature 310 may show that a user of the first vehicle has a habit of start charging the vehicle mostly at a low level of SoC and end the charging at a low level of SoC.

FIG. 4 is a diagram illustrating a process of classifying a feature according to an example embodiment.

Referring to FIG. 4, based on a plurality of features 410 of a battery charging pattern, a predetermined number n of data sets 420 including a data set 1 indicated by reference numeral 422, data set 2 indicated by reference numeral 424, and data set n indicated by reference numeral 426 may be generated. Each of the predetermined number of data sets, for example, may include at least one feature, and a number of the at least one feature included in each data set may be determined in proportion to a number of the plurality of features. As a specific example, when 10,000 features are generated and an n value is set as 10, the number of at least one feature included in each data set is 800, calculated by dividing 8000 which is 80% of 10,000 by 10. According to example embodiments, the number of at least one feature included in each data set may be determined as a more adequate value, considering a total number of features generated, to acquire data sets in which the generated features are equally sampled.

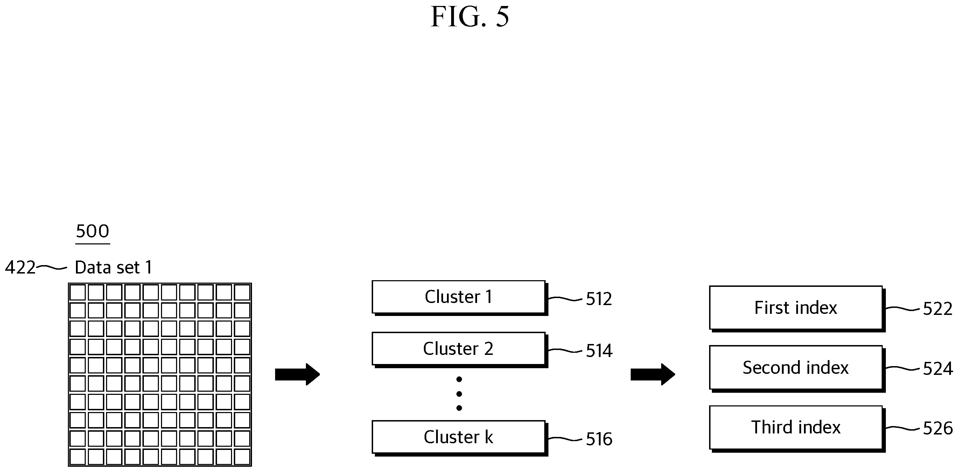

FIG. 5 is a diagram illustrating a process of determining an optimal number of clusters corresponding to a data set according to an example embodiment.

According to an example embodiment, the electronic apparatus 100 may perform clustering multiple times on a first data set among the predetermined number of data sets so that the first data set has different numbers of clusters according to the clustering algorithm and determine an optimal number of clusters for the first data set based on a result of the clustering performed multiple times and an index for evaluating the result of the clustering. Specifically, the electronic apparatus 100 may perform clustering multiple times so that the first data set has k number (kE {2, 3, ..., k}) of clusters according to the clustering algorithm. The electronic apparatus 100 may perform clustering on the first data multiple times by causing a number of clusters to change every time clustering is performed.

According to an example embodiment, the clustering algorithm performed on the first data set may be one of all kinds of clustering algorithms of which a number of clusters can be set as a parameter (that is, can be hypyerparameterized). As an example, the clustering algorithm may be a hierarchical clustering algorithm that stratifies at least one feature included in each data set based on similarity. Since the hierarchical clustering algorithm calculates an initial distance matrix and repeats process of merging clusters in closer distance or separating them into a sub-cluster, the algorithm may require very small amount of calculation. As another example, the clustering algorithm may be a K-means clustering algorithm that clusters at least one feature included in each data set based on a centroid. The K-means clustering algorithm assigns a data point to the nearest cluster based on a centroid selected at an initial stage and repeats the process of clustering by calculating the centroid of the cluster until having an identical centroid, and since the repetitive calculation can be processed in parallel, the algorithm may perform faster calculation on a large-scale data set.

Then, the electronic apparatus 100 may determine an optimal number of clusters for the first data set based on a result of the clustering performed multiple times and an index for evaluating the result of the clustering. The index, for example, may include a first index, a second index, and a third index, and the electronic apparatus 100 may calculate each of the first index according to a number of clusters, the second index according to a number of clusters, and the third index according to a number of clusters, based on the result of the clustering performed multiple times. The index according to the number of clusters may refer to an evaluation index that evaluates a result of clustering performed with different k values, and, for example, may be presented in the form of a graph. However, the type of an index calculated based on the result of the clustering performed multiple times by the electronic apparatus 100 is not limited to three types of indexes, and, according to example embodiments, it is to be understood by those skilled in the art that more kinds of indexes may be calculated.

According to an example embodiment, each of the fist index, the second index, and the third index may include at least one of a Silhouette Index technique, a Calinski-Harabasz Index technique, and Davies-Bouldin Index technique, that evaluates a result of clustering based on cohesion of each cluster and separation between clusters for each result of clustering performed according to the clustering algorithm. The above techniques have different processes of calculating the cohesion and the separation. For example, according to the Silhouette Index technique, the cohesion may be calculated based on an average of a distance between each data point and all other data points within the same cluster, and the separation may be calculated based on an average of a distance between each cluster and all data points within another cluster nearest to each cluster. On the other hand, according to the Calinski-Harabasz Index technique, the cohesion may be calculated based on a square of an average distance between each data point and center of the corresponding cluster, and the separation may be calculated based on a square of an average of a distance between a center of each cluster and a center of the entire data set. In addition, according to the Davies-Bouldin Index technique, the cohesion is calculated based on an average of a distance between each data point and a center of the corresponding cluster, and the separation may be calculated based on an average of a distance between centers of each cluster.

Then, the electronic apparatus 100 may determine the optimal number of clusters for the first data set based on a first number of clusters corresponding to a maximum value or a minimum value of the first index according to the calculated number of clusters, a second number of clusters corresponding to a maximum value or a minimum value of the second index according to the calculated number of clusters, and a third number of clusters corresponding to a maximum value or a minimum value of the third index according to the calculated number of clusters. Here, each of the maximum value or the minimum value of the first index, the maximum value or the minimum value of the second index, and the maximum value or the minimum value of the third index may correspond to an optimal value among the maximum value and the minimum value set based on characteristics of an index. For example, when an index is either the Silhouette Index technique or the Calinski-Harabasz Index technique, the maximum value may correspond to the optimal value, and when the index is the Davies-Bouldin Index technique, the minimum value may correspond to the optimal value. However, the optimal value for each index is not limited to the maximum value or the minimum value, and may be set as other adequate value according to the characteristics of the index.

According to an example embodiment, the optimal number of clusters for the first data set may be set to be an overlapping value among the first number of clusters, the second number of clusters, and the third number of clusters. That is, as a result of evaluation using the three indexes, a number of clusters of which the maximum values or minimum values intersect may be set as the optimal number of clusters. For example, when the first number of clusters and the second number of clusters are 9 and the third number of clusters is 8, the optimal number of clusters may be set to be 9. Accordingly, clustering with guaranteed high performance may be performed by setting a number of clusters which is evaluated to have an optimal value according to various index techniques as the optimal number of clusters for the first data set. According to other example embodiments, when the first number of clusters, the second number of clusters, and the third number of clusters have different values, an average value thereof may be set as the optimal number of clusters for the first data set.

Referring to FIG. 5 illustrating a process 500 of setting the optimal number of the data set 1 indicated by reference numeral 422, the electronic apparatus 100 may perform clustering multiple times for the data set 1 indicated by reference numeral 422 with k number of clusters. As described above, the clustering may be performed multiple times with different numbers of clusters with different k values. Then, the electronic apparatus 100 may calculate each of a first index 522 according to a k value, a second index 524 according to the k value, and a third index 526 according to the k value, and may determine an optimal number of clusters for the data set 1 indicated by reference numeral 422 based on this.

The electronic apparatus 100 may repeat the same process on each of the predetermined number of data sets, and the repetition, according to example embodiments, may be performed sequentially or may be performed in parallel simultaneously. Conventionally, an intervention of an operator for reducing a number of clusters by identifying and manually merging what considered to be similar data is required, however, according to the present disclosure, since a reference number of clusters may be set to be a value collected through the repetitive process such as the above-described process using the clustering algorithm and the index without requiring intervention of an operator, more effective and objective categorization of data may be possible.

FIG. 6a is a graph showing a first index, according to a number of clusters, according to an example embodiment.

Here, the first index may be the Silhouette Index. A graph 600 shows the Silhouette Index evaluated on each k value which is a number of clusters within a range from 2 to 30, with a number of clusters k on the x-axis and the Silhouette Index on the y-axis. The SlIⱼs graph shows the Silhouette Index calculated using the Jensen-Shannon Divergence which measures similarity between data points based on probability distribution, and the SI_{EUC} graph shows the Silhouette Index calculated using the Euclidean distance which is for calculating a distance between data points based on a straight-line distance between data points. In the case of the Silhouette Index technique, considering that the maximum value is the optimal value, a number of clusters corresponding to the optimal value of the first index may be 7 for both SI_{JS} graph and SI_{EUC} graph.

FIG. 6b is a graph showing a second index, according to a number of clusters, according to an example embodiment.

Here, the second index may be the Calinski-Harabasz Index. A graph 610 shows the Calinski-Harabasz Index (CHI) evaluated on each of a k value which is a number of clusters within a range from 2 to 30, with the number of clusters k on the x-axis and the Calinski-Harabasz Index on the y-axis. In the case of the Calinski-Harabasz Index technique, considering that the maximum value is the optimal value, a number of clusters corresponding to the optimal value of the second index may be 7, identical to that shown in FIG. 6a.

FIG. 6c is a graph showing a third index, according to a number of clusters, according to an example embodiment.

Here, the third index may be the Davies-Bouldin Index. A graph 620 shows the Davies-Bouldin Index (DBI) evaluated on each k value which is a number of clusters within a range from 2 to 30, with a number of clusters k on the x-axis and the Davies-Bouldin Index on the y-axis. In the case of the Davies-Bouldin Index technique, considering that the minimum value is the optimal value, a number of clusters corresponding to the optimal value of the third index may be 7 as identical to that shown in FIGS. 6a and 6b.

That is, in examples shown in FIGS. 6a through 6c, the optimal number of clusters for a target data determined based on calculated indexes may be 7.

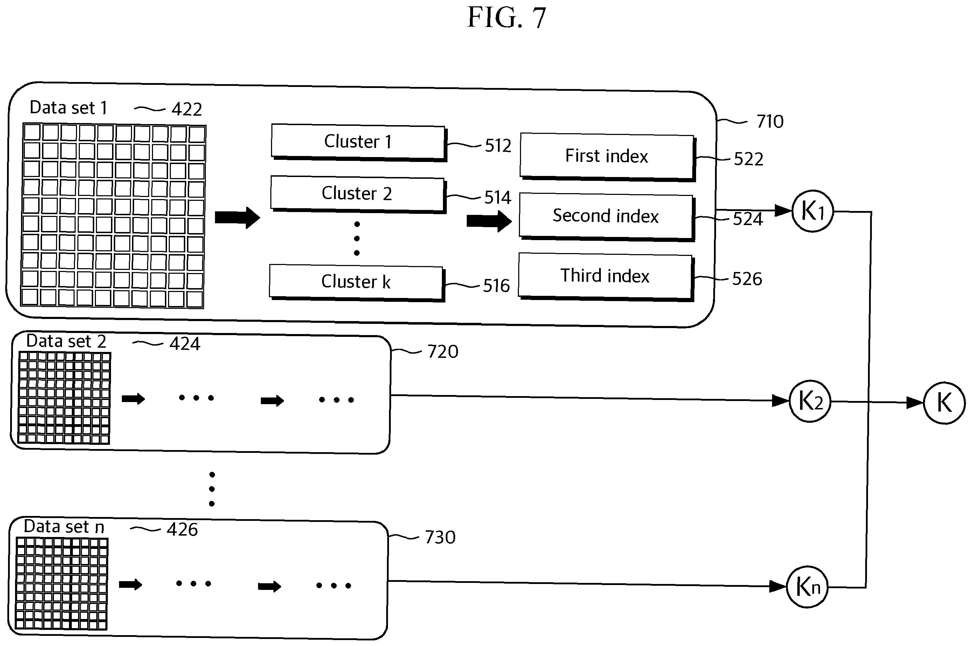

FIG. 7 is a diagram illustrating a process of setting a reference number of clusters according to an example embodiment.

According to an example embodiment, the electronic apparatus 100 may set an average value of an optimal number of clusters of each of the predetermined data sets as a reference number of clusters. Referring to FIG. 7, the electronic apparatus 100 may determine an optimal number of clusters by repeating the process described in detail with referent to FIGS. 4 and 5 on each of the data set 1 indicated by reference numeral 422, data set 2 indicated by reference numeral 424, and data set n indicated by reference numeral 426. When K₁ is an optimal number of clusters corresponding to the data set 1 indicated by reference numeral 422, and K₂ is an optimal number of clusters corresponding to the data set 2 indicated by reference numeral 424, and Kₙ is an optimal number of clusters corresponding to the data set n indicated by reference numeral 426, a reference number of clusters set in order to perform final clustering on a plurality of features may be an average value of K₁, K₂, and Kₙ. That is, the electronic apparatus 100 may perform clustering on the plurality of features with more adequate number by setting an optimal reference number of clusters corresponding to the plurality of features based on an optimal number of clusters corresponding to each data set generated by sampling the plurality of features.

The electronic apparatus according to the above-described example embodiments may include a processor, a memory for storing program data and executing the stored program data, a permanent storage such as a disk drive, a communications port for communicating with external devices, a user interface device such as a touch panel, a key and a button, and the like. Methods implemented by a software module or an algorithm may be stored in a computer-readable recording medium as computer-readable codes or program instructions which may be executed by the processor. Here, the computer-readable recording medium may be a magnetic storage (such as a read-only memory (ROM), a random-access memory (RAM), a floppy disk, and a hard disk), an optical storage (such as a CD-ROM, and a digital versatile disc (DVD)), and the like. The computer-readable recording medium may be distributed over computer systems connected to a network so that the computer-readable code is stored and executed in a distribution manner. The medium may be read by the computer, stored in the memory, and executed by the processor.

The example embodiments may be described in terms of functional block components and various processing operations. Such functional blocks may be realized by any number of hardware and/or software components configured to perform specified functions. For example, the example embodiments may adopt direct circuit configurations such as a memory, a processor, a logic circuit, and a look-up table that may execute various functions by control of one or more microprocessors or other control devices. Similarly to that elements may be executed by software programming or software elements, the example embodiments may be implemented by programming or scripting languages such as C, C++, Java, and assembler including various algorithms implemented by combinations of data structures, processes, routines, or of other programming configurations. Functional aspects may be implemented by algorithms executed by one or more processors. In addition, the example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor, for example.

The example embodiments described above are merely an example and other embodiments may be implemented within the scope of the following claims.

## Claims

1. An electronic apparatus comprising:
a transceiver;
a processor; and
one or more memories storing one or more instructions,
wherein, when executed, the one or more instructions are configured to cause the processor to:
acquire a plurality of battery charge data of a plurality of vehicles;
generate a plurality of features of a battery charging pattern based on the plurality of battery charge data;
classify the plurality of features into a predetermined number of data sets by sampling the plurality of features;
determine a number of clusters corresponding to each of the predetermined number of data sets based on a clustering algorithm and an index for evaluating a result of clustering;
set a reference number of clusters corresponding to the plurality of features based on an optimal number of clusters for each of the predetermined number of data sets; and
perform clustering the plurality of features into clusters of which a number is the reference number of clusters.

2. The electronic apparatus of claim 1, wherein the plurality of battery charge data include a state of charge (SoC) over time for each of a plurality of batteries included in the plurality of vehicles as data collected during a predetermined period of time.

3. The electronic apparatus of claim 2, wherein, when executed, the one or more instructions are configured to cause the processor to:
identify one or more charging sections based on first battery charge data of a first vehicle among the plurality of battery charge data of the plurality of vehicles;
identify a battery SoC at a start of a charging and a battery SoC at an end of the charging for each of the one or more charging sections; and
generate a first feature indicating frequency of the one or more charging sections corresponding to a range of a battery SoC at the start of a charging and a range of a battery SoC at the end of the charging.

4. The electronic apparatus of claim 1, wherein each of the predetermined
number of data sets includes at least one feature, and
a number of the at least one feature is determined in proportion to a number of the plurality of features.

5. The electronic apparatus of claim 1, wherein, when executed, the one or more instructions are configured to cause the processor to:
perform clustering multiple times on a first data set among the predetermined number of data sets so that the first data set has different numbers of clusters according to the clustering algorithm; and
determine an optimal number of clusters for the first data set based on a result of the clustering performed multiple times and the index for evaluating the result of the clustering.

6. The electronic apparatus of claim 5, wherein the clustering algorithm includes at least one of a hierarchical clustering algorithm that stratifies at least one feature included in each data set based on similarity and a K-means clustering algorithm that clusters the at least one feature included in each data set based on a centroid.

7. The electronic apparatus of claim 5, wherein the index includes a first index, a second index, and a third index, and
when executed, the one or more instructions are configured to cause the processor to:
calculate the first index according to a number of clusters, the second index according to a number of clusters, and the third index according to a number of clusters based on the result of the clustering performed multiple times; and
determine the optimal number of clusters for the first data set based on a first number of clusters corresponding to a maximum value or a minimum value of the first index according to the calculated number of clusters, a second number of clusters corresponding to a maximum value or a minimum value of the second index according to the calculated number of clusters, and a third number of clusters corresponding to a maximum value or a minimum value of the third index according to the calculated number of clusters.

8. The electronic apparatus of claim 7, wherein each of the first index, the second index, and the third index includes at least one of a Silhouette Index technique, a Calinski-Harabasz Index technique, and a Davies-Bouldin Index technique that evaluate a result of clustering based on cohesion of each cluster and separation between clusters for each result of clustering performed according to the clustering algorithm.

9. The electronic apparatus of claim 1, wherein, when executed, the one or more instructions are configured to cause the processor to set an average value of the optimal number of clusters for each of the predetermined number of data sets as the reference number of clusters.

10. A method for clustering data regarding a battery charging pattern, the method performed by an electronic apparatus, and comprising:
acquiring a plurality of battery charge data of a plurality of vehicles;
generating a plurality of features of a battery charging pattern based on the plurality of battery charge data;
classifying the plurality of features into a predetermined number of data sets by sampling the plurality of features;
determining a number of clusters corresponding to each of the predetermined number of data sets based on a clustering algorithm and an index for evaluating a result of clustering;
setting a reference number of clusters corresponding to the plurality of features based on an optimal number of clusters for each of the predetermined number of data sets; and
performing clustering the plurality of features into clusters of which a number is the reference number of clusters.

11. A non-transitory computer-readable recording medium in which a program for executing the method of claim 10 on a computer is stored.
